# EUROPÄISCHE PATENTSCHRIFT

(11) **EP 3 994 052 B1**
(45) Veröffentlichungstag und Bekanntmachung des Hinweises auf die Patenterteilung: **02.08.2023**
(21) Anmeldenummer: 20733985.4
(22) Anmeldetag: 19.06.2020
(51) Int. Cl.: B62D 55/22, B62D 55/205, B62D 55/04

(54) **GLEITSCHUTZKETTE MIT VERDREHSPERRE ZIWSCHEN BENACHBARTEN KETTENGLIEDERN**
ANTI-SKID DEVICE WITH ROTATION LOCK MECHANISM BETWEEN ADJACENT LINK PORTIONS
CHAÎNE ANTI-GLISSANTE AVEC VERROUILLAGE DE ROTATION ENTRE LES MAILLONS DE CHAÎNE VOISINS

(30) Priorität: 01.07.2019 DE 102019209620
(43) Veröffentlichungstag der Anmeldung: 11.05.2022
(73) Patentinhaber: RUD Ketten Rieger & Dietz GmbH u. Co. KG, 73432 Aalen (DE)
(72) Erfinder: RIEGER, Johannes Werner, 73447 Oberkochen (DE); RÖSLER, Bernd, 73433 Aalen-Wasseralfingen (DE)
(74) Vertreter: Grünecker Patent- und Rechtsanwälte PartG mbB
(86) Internationale Anmeldenummer: PCT/EP2020/067111
(87) Internationale Veröffentlichungsnummer: WO 2021/001172

(56) Entgegenhaltungen:
- WO-A1-2013/135427
- WO-A2-2018/104770
- DE-C- 703 043

## Beschreibung

Die Erfindung betrifft eine Gleitschutzkette für Reifen, insbesondere für Bogie-Achsen, wobei die Gleitschutzkette zwei seitenstabile Führungsketten aufweist, die im montierten Zustand seitlich der Laufflächen der Reifen angeordnet sind, wobei die Gleitschutzkette ein biegeschlaffes Laufnetz aufweist, das sich zwischen den beiden Führungsketten erstreckt, und wobei wenigstens eine Führungskette in Umfangsrichtung durch Gelenkbolzen miteinander gelenkartig verbundene Kettenglieder und wenigstens eine Verdrehsperre, durch die ein maximaler Gelenkwinkel zwischen zwei miteinander verbundenen Kettengliedern vorgegeben ist, aufweist, wobei der Gelenkwinkel zwischen zwei miteinander verbundenen Kettengliedern der Winkel ist, den die beiden miteinander verbundenen Kettenglieder miteinander einschließen.

Gleitschutzketten, insbesondere für Bogie-Achse, also für Doppelachsaggregate, sind beispielsweise aus der WO 2013/135427 bekannt. Die dort beschriebene Gleitschutzkette ist aufgrund ihrer Führungsketten seitenstabil. Auch ist sie mit einer Verdrehsperre versehen, die einen Selbsttrageradius der Führungsketten vorgibt. Diese Gleitschutzkette ist jedoch aufwändig zu fertigen. Aus der WO 2018/104 770 A2 ist ein Personentransporter mit einem Kettenantrieb bekannt, bei dem einzelne Kettenglieder mit Verdrehsperren versehen sein können. Die Verdrehsperren sind als auf den Kettengliedern angeordnete Abstandshalter gebildet, welche das Verdrehen zweier benachbarter Kettenglieder oberhalb eines bestimmten Verdrehwinkels blockieren. Aus der DE 703 043 C ist eine Gleiskette bekannt, bei der die Kettenglieder aus Bandmaterial gefertigt sind und jeweils insgesamt eine Rechteckform aufweisen, um eine Torsion der Seitenketten zu verhindern.

Somit liegt der Erfindung die Aufgabe zugrunde, eine seitenstabile Gleitschutzkette der oben genannten Art bereitzustellen, die einfach zu fertigen ist.

Diese Aufgabe wird für die erfindungsgemäße Gleitschutzkette dadurch gelöst, dass die Verdrehsperre zum Teil an wenigstens einem Gelenkbolzen angeordnet ist. Durch die Anordnung der Verdrehsperre an einem Gelenkbolzen eines Kettengliedes ist eine einfache und kostengünstige Herstellung möglich, da sich die Gelenkbolzen von Kettengliedern einfach herstellen lassen. Der Gelenkbolzen kann zudem als Gelenk genutzt werden, welches die Beweglichkeit der Kettenglieder der Führungskette zueinander definiert und dabei die Seitenstabilität gewährleistet. Der Gelenkbolzen ist zudem von außen durch das Kettenglied, durch das er sich hindurch erstreckt, gut abgeschirmt, so dass Beschädigungen der Verdrehsperre weniger wahrscheinlich sind.

Durch die erfindungsgemäße Verdrehsperre kann das Einhalten des maximalen Gelenkwinkels gewährleistet werden. Durch die Einhaltung des maximalen Gelenkwinkels kann wiederum ein Schrägzug der Gleitschutzkette verhindert werden. Ein solcher Schrägzug kann insbesondere dann entstehen, wenn sich die beiden Führungsketten einer Gleitschutzkette mit unterschiedlichen Geschwindigkeiten entlang einer Umfangsrichtung der Gleitschutzkette bewegen.

Der Gelenkwinkel zwischen zwei miteinander verbundenen Kettengliedern ist der Winkel, den die beiden Kettenglieder miteinander einschließen. Bei einer geradlinig gestreckten Kette wäre der Gelenkwinkel folglich 180°. Bevorzugt wird der Gelenkwinkel so eingestellt, dass sich die Führungskette nur so weit um die Reifenachse herumbiegen kann, dass ihr Radius in etwa gleich dem Radius einer Reifenlauffläche im unbelasteten Zustand des Reifens ist. Der Radius, den die Führungskette durch die Verdrehsperren bei Erreichen des maximalen Gelenkwinkels einnimmt, wird als Selbsttrageradius bezeichnet. Unter Umständen kann der Selbsttrageradius etwas kleiner oder auch etwas größer als der Radius des Reifens im unbelasteten Zustand sein.

Die erfindungsgemäße Lösung kann durch verschiedene, jeweils für sich vorteilhafte und beliebig miteinander kombinierbare Ausgestaltungen weiter verbessert werden. Auf diese Ausführungsformen und die mit ihnen verbundenen Vorteil ist im Folgenden eingegangen.

Gemäß einer ersten vorteilhaften Ausgestaltung ist der wenigstens eine Gelenkbolzen axial ausgerichtet. Axial bezieht sich dabei auf die Reifenachse. Die axiale Richtung erstreckt sich senkrecht zu einer Umfangsrichtung, entlang der sich die geschlossene Gleitschutzkette erstreckt. Mit anderen Worten kann sich die gelenkartige Verbindung um eine Gelenkachse bewegen, welche im Wesentlichen senkrecht zur Umfangsrichtung der Gleitschutzkette ausgerichtet ist. Die Kettenglieder können sich in radialer Richtung um die Gelenkachsen relativ zueinander verschwenken, bis sie durch die Verdrehsperre gestoppt werden.

Die Gelenkachse der Gelenkbolzen ist dabei jedoch nicht zwingend exakt parallel zur Reifenachse ausgerichtet. Eine Abweichung der Gelenkachsen von der Reifenachse kann beispielsweise dadurch entstehen, dass sich die Gelenkachsen, wenn die Führungsketten an den Reifenschultern anliegen, sich nicht exakt parallel zu den Reifenachsen erstrecken, sondern eine Neigung in radialer Richtung aufweisen können.

Durch die axiale Ausrichtung der Gelenkachse ist jedoch eine Auslenkung der miteinander verbundenen Kettenglieder in axialer Richtung verringert oder verhindert. Hierdurch wird die Seitenstabilität der Führungsketten gewährleistet. Die Kettenglieder der Führungsketten können sich nur innerhalb von quer zur Reifenachse ausgerichteten Ebenen bewegen.

Die wenigstens eine Verdrehsperre kann wenigstens eine Anschlagfläche am Gelenkbolzen aufweisen, die beim maximalen Gelenkwinkel an der Innenseite einer Öffnung des den Gelenkbolzen haltenden Kettengliedes anschlägt. Mit anderen Worten ist der maximale Gelenkwinkel erreicht, wenn der wenigstens eine Gelenkbolzen mit der Anschlagfläche an der Innenseite, insbesondere an einer radial außenliegenden Innenseite, der Öffnung eines den Gelenkbolzen haltenden Kettengliedes angeschlagen ist. Hierdurch wird eine weitere Drehung bzw. Auslenkung der Kettenglieder zueinander wirksam verhindert.

Gemäß einer weiteren vorteilhaften Ausgestaltung kann die wenigstens eine Führungskette aus abwechselnd stehenden und liegenden, jeweils zumindest in etwa ringförmigen Kettengliedern aufgebaut sein, wobei bei den stehenden Kettengliedern zentrale Öffnungen axial ausgerichtet und bei den liegenden Kettengliedern radial ausgerichtet bzw. durchgängig sind, und wobei die liegenden Kettenglieder die Gelenkbolzen aufweisen.

Die stehenden Kettenglieder können jeweils eine Ebene aufspannen, die im Wesentlichen senkrecht zur axialen Richtung verläuft. Die liegenden Kettenglieder können jeweils eine Ebene aufspannen, die im Wesentlichen senkrecht zur radialen Richtung verläuft.

Die stehenden Kettenglieder können im montierten Zustand an der Lauffläche der Reifen anliegen. In die Öffnungen der stehenden Kettenglieder können die Gelenkbolzen der liegenden Kettenglieder eingesetzt und drehbar in diesen gelagert sein. Um das Einsetzen zu erleichtern, können die stehenden Kettenglieder die Form eines offenen Ringes haben oder mit anderen Worten C-förmig sein. Nach dem Einsetzen der liegenden Kettenglieder mit dem Gelenkbolzen können die Öffnungen in den stehenden Kettengliedern geschlossen werden. Die stehenden Kettenglieder sind bevorzugt aus einem Bandmaterial gefertigt.

Die stehenden Kettenglieder können darüber hinaus Führungsstege zum Führen der Führungsketten an den Reifen aufweisen. Die Führungsstege erstrecken sich im montierten Zustand bevorzugt zumindest ein Stück weit radial nach innen entlang der Reifenflanke. Bevorzugt sind an den stehenden Kettengliedern Kettenglieder des Laufnetzes befestigt.

Die Gelenkbolzen sind bevorzugt monolithisch mit dem die Gelenkbolzen aufweisenden Kettenglied ausgeformt, beispielsweise durch Schmieden. Bevorzugt weist ein Kettenglied jeweils zwei Gelenkbolzen auf, wobei die Gelenkbolzen an den sich gegenüberliegenden Enden eines Kettenglieds angeordnet sein und die Schenkel des Kettenglieds miteinander verbinden. Die Gelenkbolzen ersetzen sozusagen die Rundungen des Kettenglieds. Bevorzugt sind die die Gelenkbolzen aufweisenden Kettenglieder aus Rundmaterial, insbesondere aus Rundstahl geformt. Selbstverständlich können die Gelenkbolzen auch Bolzen sein, die wie bei bekannten Gelenkketten in Öffnungen der Schenkel eingesetzt und mit diesen unverlierbar verbunden sind.

Um eine möglichst einfach herzustellende und gleichzeitig wirksame Anschlagfläche am Gelenkbolzen zu erhalten, weist der wenigstens eine Gelenkbolzen zur Bildung der wenigstens einen Anschlagfläche bevorzugt einen nicht kreisförmigen Querschnitt auf. Insbesondere eine Stelle des Querschnitts, die von einer Kreisform abweicht, kann als Anschlagfläche zum Anschlagen an eine Innenseite der Öffnung eines der stehenden Kettenglieder genutzt werden.

Besonders bevorzugt ist derwenigstens eine Gelenkbolzen, insbesondere in seinem Querschnitt, mit wenigstens einer Schulter versehen, die die wenigstens eine Anschlagfläche aufweist. Entlang ihrer Längserstreckung kann die Schulter eine Wulst oder einen Grat formen.

Zur einfachen Herstellung einer Anschlagfläche kann der wenigstens eine Gelenkbolzen mit wenigstens einem angefügtes Zusatzelement versehen sein, das die wenigstens eine Anschlagfläche aufweist. Das angefügte Zusatzelement kann beispielsweise durch eine stoffschlüssige Verbindung mit dem übrigen Gelenkbolzen verbunden sein. Eine solche Verbindung kann insbesondere durch Anschmieden des angefügten Zusatzelements am übrigen Gelenkbolzen erreicht werden.

Alternativ dazu kann ein Zusatzelement auch angeschweißt oder anders befestigt sein. Ebenfalls kann es möglich sein, einen Gelenkbolzen ohne Zusatzelement so zu formen, dass dieser eine Anschlagfläche bildet, insbesondere eine solche Anschlagfläche, die in einem Bereich angeordnet ist, in der der Gelenkbolzen von einem kreisförmigen Querschnitt abweicht. Beispielsweise kann eine solche Anschlagfläche durch Schmieden oder durch spanende Verfahren geformt sein.

Die wenigstens eine Anschlagfläche ist bevorzugt so ausgerichtet, dass sie bei maximalem Gelenkwinkel parallel zur Innenseite des stehenden Kettengliedes anliegt. Die Parallelität bezieht sich dabei auf den Bereich der Innenseite, an dem die Anschlagfläche selbst anliegt.

Um zu erreichen, dass sich der wenigstens eine Gelenkbolzen in dem Kettenglied, in dem der Gelenkbolzen aufgenommen ist, bis zum Erreichen des maximalen Gelenkwinkels drehen kann, ist die wenigstens eine Anschlagfläche bevorzugt vom übrigen die Anschlagfläche aufweisenden Kettenglied weg weisend angeordnet. Mit anderen Worten weist eine Flächennormale der Anschlagfläche bevorzugt vom übrigen, die Anschlagfläche aufweisenden, Kettenglied weg. Insbesondere kann die Flächennormale zumindest teilweise in Richtung auf das nächste in Umfangsrichtung liegende Kettenglied weisen. In einem Querschnitt des Gelenkbolzens ist die wenigstens eine Anschlagfläche bevorzugt im Wesentlichen innerhalb einer dem übrigen Kettenglied gegenüberliegenden Querschnittshälfte angeordnet.

Bevorzugt ist jeder der zwei Gelenkbolzen eines Kettengliedes mit einer Anschlagfläche versehen. Ebenfalls bevorzugt ist jedes stehende Kettenglied mit zwei liegenden Kettengliedern verbunden, wobei jedes der zwei liegenden Kettenglieder zwei Gelenkbolzen mit Anschlagflächen aufweist. Von den beiden Gelenkbolzen der zwei liegenden Kettenglieder, die im stehenden Kettenglied aufgenommen sind, liegen sich bevorzugt die beiden Anschlagflächen in Bezug auf die Öffnung des stehenden Kettengliedes gegenüber. Mit anderen Worten kreuzen sich die Flächennormalen der beiden Anschlagfläche.

Die wenigstens eine Anschlagfläche ist bevorzugt an einer radial außenliegenden Seite, bzw. einer Außenseite eines Gelenkbolzens angeordnet. Dadurch stößt die Anschlagfläche bei maximalem Gelenkwinkel an der radial innenliegenden Seite einer Öffnung des stehenden Kettengliedes an.

Beim Erreichen des maximalen Gelenkwinkels liegt die wenigstens eine Anschlagfläche bevorzugt zumindest abschnittsweise plan an der Innenseite der Öffnung des den Gelenkbolzen haltenden, insbesondere stehenden, Kettengliedes an. Bevorzugt ist die Anschlagfläche dabei zumindest abschnittsweise eben, um eine möglichst große Kontaktfläche zu erhalten.

Um die seitliche Führung der Gleitschutzkette am Reifen zu verbessern, kann wenigstens ein stehendes Kettenglied mit wenigstens einem sich radial in Richtung der Reifenachse erstreckenden Führungssteg zum seitlichen Führen der Gleitschutzkette versehen sein.

Um ein einfach herzustellendes stehendes Kettenglied mit wenigstens einem Führungssteg zu erhalten, kann das wenigstens eine stehende Kettenglied ein C-förmiges Teilglied mit einer Unterbrechung in einem Schenkel aufweisen, wobei die Unterbrechung durch den wenigstens einen Führungssteg zumindest teilweise geschlossen ist. Der wenigstens eine Führungssteg ist dabei bevorzugt mittig im Kettenglied angeordnet. An den sich gegenüberliegenden Enden, welche die Rundungen des stehenden Kettengliedes aufweisen, sind bevorzugt die Gelenkbolzen gehalten. Durch den Führungssteg können die Gelenkbolzen nicht zur Unterbrechung im Schenkel gelangen und sind daher verliersicher mit dem stehenden Kettenglied verbunden.

Um eine besonders gute Seitenführung zu erhalten, ist eine radiale Länge des stehenden Kettenglieds, insbesondere inklusive des Führungsstegs, größer als eine Länge des stehenden Kettengliedes in Umfangsrichtung.

Das biegeschlaffe Laufnetz ist bevorzugt aus Kettengliedern und Traktionsstegen zusammengesetzt.

Im Folgenden ist die Erfindung beispielhaft anhand einer vorteilhaften Ausführungsform mit Bezug auf die Zeichnungen näher erläutert. Die bei der Ausführungsform beispielhaft dargestellte Merkmalskombination kann nach Maßgabe der obigen Ausführungen entsprechend den für einen bestimmten Anwendungsfall notwendigen Eigenschaften der erfindungsgemäßen Gleitschutzkette durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: eine perspektivisch Darstellung eines Teilabschnitts einer erfindungsgemäßen Gleit-schutzkette;
- Fig. 2: eine Seitenansicht der Gleitschutzkette mit Blick auf eine Führungskette;
- Fig. 3: eine vergrößerte Darstellung eines in Fig. 2 markierten Querschnitts eines Gelenkbol-zens; und
- Fig. 4: einen Querschnitt quer zur Umfangsrichtung durch ein stehendes Kettenglied mit Führungssteg.

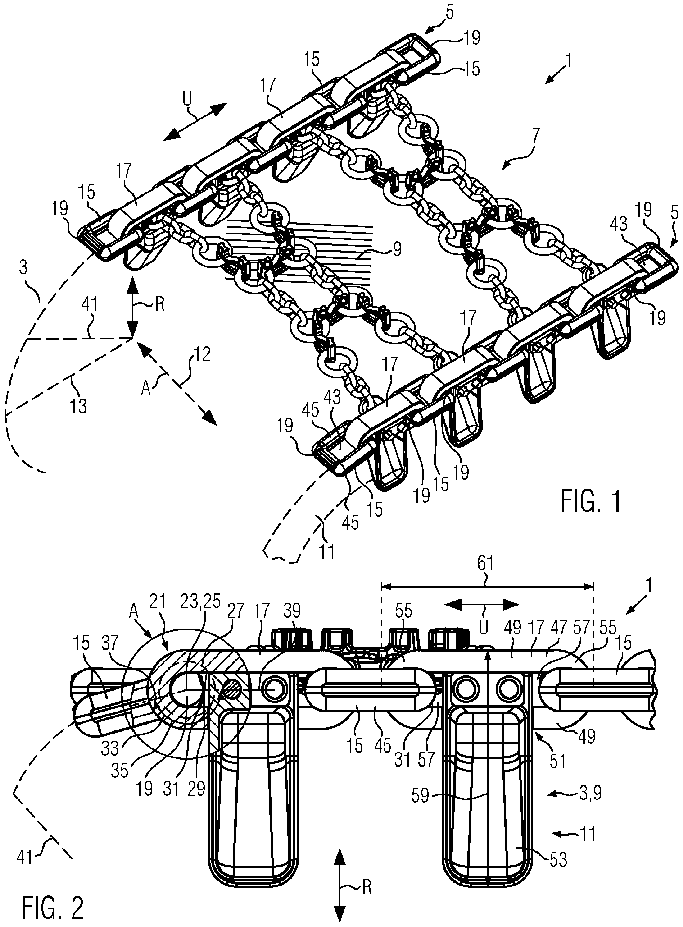

Im Folgenden ist der allgemeine Aufbau der erfindungsgemäßen Gleitschutzkette 1 mit Bezug auf die Figuren 1 und 2 beschrieben.

Die Gleitschutzkette 1 ist für Reifen 3 vorgesehen, welche in Fig. 1 nur gestrichelt angedeutet sind. Insbesondere kann die Gleitschutzkette 1 für Doppelachsaggregate bzw. Bogie-Achsen verwendet werden.

Die Gleitschutzkette 1 weist zwei seitenstabile Führungsketten 5 und ein sich zwischen den Führungsketten 5 erstreckendes biegeschlaffes Laufnetz 7 auf. In einem am Reifen 3 montierten Zustand sind die Führungsketten 5 zumindest abschnittsweise seitlich der Laufflächen 9 der Reifen 3 angeordnet. Mit anderen Worten können Teile der Führungsketten 5 an den Reifenflanken 11 anliegen, um eine seitliche Führung der Gleitschutzkette 1 zu gewährleisten.

Die Lauffläche 9 und die Reifenflanke 11 sind in den Fig. 1 und 2 lediglich angedeutet. Nicht dargestellt ist in den Figuren, dass sich die Gleitschutzkette 1 entlang ihrer Umfangsrichtung U bevorzugt um jeweils zwei Reifen 3 erstreckt.

Die Reifen 3 weisen eine quer zur Umfangsrichtung U verlaufende Achse 12 auf, die eine axiale Richtung A vorgibt. Die Reifen 3 haben zudem einen Radius 13, der sich von der Achse 12 zur Lauffläche 9 erstreckt.. Beide sind in den Figuren 1 und 2 lediglich angedeutet. Im montierten Zustand liegt das biegeschlaffe Laufnetz 7 zumindest abschnittsweise an der Lauffläche 9 wenigstens eines Reifens 3 an.

Die Führungsketten weisen jeweils Kettenglieder 15 und 17 auf, wobei die Kettenglieder 15 und 17 gelenkartig miteinander verbunden sind. Hierzu weisen die Kettenglieder 15 jeweils zwei Gelenkbolzen 19 auf, die in den Kettengliedern 17 drehbar angeordnet sind.

Die Verbindung zwischen zwei miteinander verbundenen Kettengliedern 15 und 17 bildet also jeweils ein Drehgelenk 21. Dabei sind die Kettenglieder 15 und 17 zueinander um eine Gelenkachse 23 drehbar, welche mit einer Längsachse 25 des Gelenkbolzens 19 zusammenfällt. Die Gelenkachse 23 ist dabei in etwa parallel zur axialen Richtung A ausgerichtet. Abweichungen der Gelenkachse 23 von der axialen Richtung A können sich dadurch ergeben, dass eine Führungskette 5 im am Reifen 3 montierten Zustand auf einer nicht ebenen Lauffläche 9 aufliegt oder in Richtung der Reifenflanke 11 verrutscht ist.

Die Führungsketten 5 weisen darüber hinaus Verdrehsperren 27 auf. Die Verdrehsperren 27 sind durch das Zusammenspiel eines Gelenkbolzens 19 und der Innenseite 29 der Öffnung 31 des Kettenglieds 17, in dem der Gelenkbolzen 19 aufgenommen ist, gebildet.

Durch eine Verdrehsperre 27 ist die Verdrehung zweier miteinander verbundener Kettenglieder 15 und 17 in Richtung zur Reifenachse 12 begrenzt. Bei einer Bewegung um die Gelenkachse 23 schließen die Kettenglieder 15 und 17 einen Gelenkwinkel 33 zwischen sich ein. Der Gelenkwinkel 33 kann zwischen den Längsachsen 37 und 39 der Kettenglieder 15 und 17 ermittelt werden. Durch die Verdrehsperre 27 ist ein maximaler Gelenkwinkel 35 vorgegeben, über den hinaus eine weitere Drehung der Kettenglieder 15 und 17 zueinander um die Gelenkachse 23 nicht möglich ist.

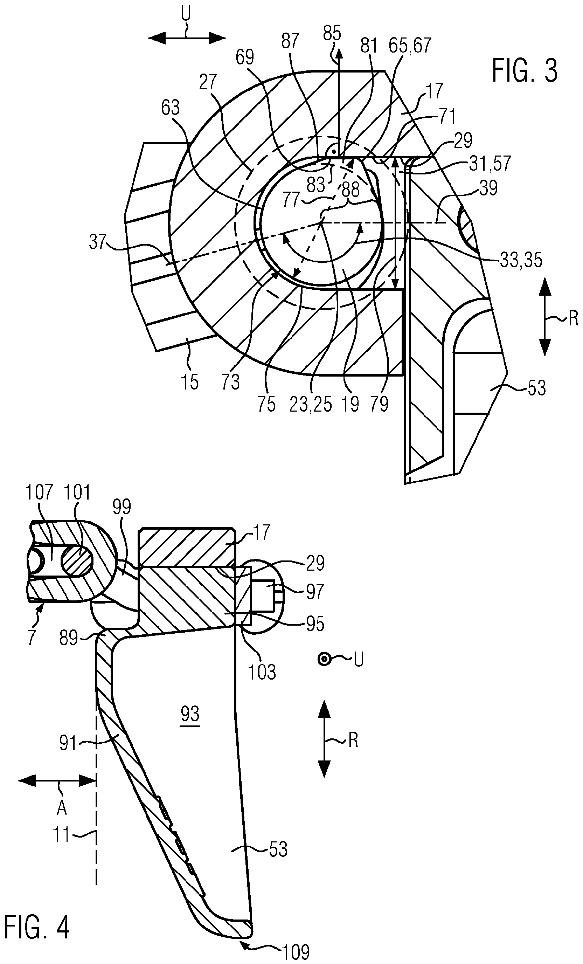

Die Verdrehsperre 27 ist zumindest zum Teil am Gelenkbolzen 19 angeordnet. Darauf ist später mit Bezug auf die Fig. 3 eingegangen.

Durch die Verdrehsperren 27 und den damit einhergehenden maximalen Gelenkwinkel 35 ist ein Selbsttrageradius 41 für die Führungsketten 5 vorgegeben. Die Führungsketten 5 können beim Aufrollen folglich keinen kleineren Radius einnehmen als den Selbsttrageradius 41. Bevorzugt liegt der Selbsttrageradius 41 in etwa im Bereich des Reifenradius 13.

Die die Gelenkbolzen 19 aufweisenden Kettenglieder 15 sind bevorzugt liegende Kettenglieder, während die Kettenglieder 17 bevorzugt stehende Kettenglieder sind. Dabei sind die Öffnungen 31 der stehenden Kettenglieder 17 axial ausgerichtet. Mit anderen Worten sind die Öffnungen 31 parallel zur axialen Richtung A durchgängig. Die Öffnungen 43 der die Gelenkbolzen 19 aufweisenden liegenden Kettenglieder 15 sind hingegen radial ausgerichtet. Mit anderen Worten erstrecken sich die Öffnungen 43 durchgängig entlang der radialen Richtung R.

Die liegenden Kettenglieder 15 sind bevorzugt jeweils einstückig gebildet. Mit anderen Worten sind die Gelenkbolzen 19 bevorzugt mit den Schenkeln 45 monolithisch gebildet.

Die stehenden Kettenglieder 17 sind bevorzugt aus C-förmigen Teilgliedern 47 gebildet, die in jeweils einem Schenkel 49 eine Unterbrechung 51 aufweisen. Die Unterbrechung 51 ist bevorzugt am radial innenliegenden Schenkel 49 angeordnet.

Durch die Unterbrechung 51 kann zumindest beim Zusammenbau der Führungskette 5 die Öffnung 31 freigegeben sein, so dass sich die Gelenkbolzen 19 der Kettenglieder 15 einfach in die Öffnung 31 einsetzen lassen. Die Unterbrechung 51 ist im fertig montierten Zustand der Führungskette 5 durch die Führungsstege 53 verschlossen. Die Führungsstege 53 dienen zur seitlichen Führung der Führungskette 5 und liegen im montierten Zustand an der Reifenflanke 11 an.

Bevorzugt erstreckt sich ein Führungssteg 53 bis zum radial außenliegenden Schenkel 49 des Kettenglieds 17. Durch den entlang der Längsachse 39 mittig im Kettenglied 17 angeordneten Führungssteg 53 sind in den Rundungen des Kettenglieds 17 jeweils zwei Teilöffnungen 57 gebildet, in denen die Gelenkbolzen 19 aufgenommen sind. Die Gelenkbolzen 19 sind dabei verliersicher in den Teilöffnungen 57 gehalten.

Die Teilöffnungen 57 sind bevorzugt so bemessen, dass sich die Kettenglieder 15 bzw. deren Gelenkbolzen 19 um die Gelenkachsen 23, zumindest bis zum Erreichen des maximalen Gelenkwinkels 35, drehen lassen. Eine Bewegung in anderer Richtung, insbesondere entlang der axialen Richtung A ist dagegen nur eingeschränkt möglich. Hierdurch wird die Seitenstabilität der Führungskette gewährleistet.

Die Führungsstege 53 sind bevorzugt mit dem C-förmigen Teilglied verschweißt. Die Führungsstege 53 sind bevorzugt mit dem Laufnetz 7 verbunden. Bevorzugt ist eine radiale Länge 59 oder, mit anderen Worten, die Höhe 59 wenigstens so groß wie die Länge 61 des stehenden Kettenglieds in Umfangsrichtung. Hierbei bezieht sich die radiale Länge 59 auf das gesamte Kettenglied 17, also inklusive des Führungsstegs 53.

Im Folgenden ist die erfindungsgemäße Verdrehsperre mit Bezug auf die Fig. 3 weiter beschrieben. Der Gelenkbolzen 19 weist einen im Wesentlichen kreisförmigen Querschnitt 63 auf. Die durchgängige Kreisform ist in Fig. 3 mit einer gestrichelten Linie dargestellt. An wenigstens einer Stelle 65 weicht der Querschnitt 63 von der Kreisform ab. Diese Stelle 65 stellt einen Anschlag 65 dar. Der Anschlag 65 stellt eine Schulter 67 im Querschnitt 63 dar.

Der Anschlag 65 weist eine Anschlagfläche 69 auf. Beim Erreichen des maximalen Gelenkwinkels 35 liegt die Anschlagfläche 69 an der Innenseite 29 der Öffnung 31 des Kettengliedes 17 an. Dabei liegt die Anschlagfläche 69 an einem radial außenliegenden Abschnitt 71 der Innenseite 29 der Öffnung 31 an. Ein der Anschlagfläche 69 über die Gelenkachse 23 gegenüberliegender Bereich 73 des Gelenkbolzens 19 kann dabei an einem radial innenliegenden Abschnitt 75 der Innenseite 29 der Öffnung 31 anliegen, bzw. sich dort abstützen.

Im Bereich des Anschlags 65, insbesondere im Bereich der Anschlagfläche 69 weist der Gelenkbolzen 19 einen Durchmesser 77 auf, welcher zum einen größer ist als ein Durchmesser der Kreisform ohne den Anschlag 65. Zum anderen ist der Durchmesser 77 größer als der Innendurchmesser 79 der Öffnung 31 bzw. der Teilöffnung 57 in radialer Richtung R.

Um eine besonders verlässliche Verdrehsperre 27 zu erhalten und um den Verschleiß des Gelenkbolzens 19 gering zu halten, ist die Anschlagfläche 69 so groß wie möglich. Deshalb erstreckt sie sich bevorzugt über den gesamten Gelenkbolzen 19 entlang der Längsachse 25 des Bolzens 19. Die Schulter 65 kann sich dabei als eine Art Wulst oder Grat entlang der Längsachse 25 auf dem Gelenkbolzen erstrecken.

Der Anschlag 65 kann monolithisch mit dem übrigen Gelenkbolzen 19 gebildet sein. Alternativ dazu kann er durch ein angefügtes Zusatzelement 81 gefertigt sein, das mit dem übrigen Gelenkbolzen 19 verbunden ist. Insbesondere kann ein Zusatzelement 81 an den übrigen Gelenkbolzen 19 durch Schmieden angefügt sein. Alternativ dazu kann ein Zusatzelement 81 an dem übrigen Gelenkbolzen 19 angeschweißt sein. Bevorzugt ist ein Zusatzelement 81 mit dem übrigen Gelenkbolzen 19 über eine stoffschlüssige Verbindung 83 verbunden.

Die Anschlagfläche 69 liegt beim Erreichen des maximalen Gelenkwinkels 35 bevorzugt plan an der Innenseite 29 bzw. 71 der Öffnung 31 an. Mit anderen Worten ist sie bevorzugt parallel zu dem Abschnitt der Innenseite 71 gebildet, an dem sie beim Erreichen des maximalen Gelenkwinkels 35 anliegt.

Die Anschlagfläche 69 ist bevorzugt vom übrigen die Anschlagfläche 69 aufweisenden Kettenglied 15 weg weisend angeordnet. Mit anderen Worten ist eine Flächennormale 85 der Anschlagfläche 69 so ausgerichtet, dass diese vom übrigen Kettenglied 15 weg weist oder, mit anderen Worten, ist ein Winkel zwischen der Flächennormale 85 und der Längsachse 37 des Kettengliedes größer als 90°. Folglich weisen die zwei Flächennormalen 85 von zwei in einem Kettenglied 17 aufgenommenen Gelenkbolzen 19 zumindest teilweise in Richtung aufeinander und kreuzen sich. Das heißt, zwei Anschlagflächen 69 der in einem Kettenglied 17 aufgenommen Gelenkbolzen 19 liegen sich in Bezug auf die Öffnung 31 des Kettenglieds 17 gegenüber.

Um am radial außenliegenden Abschnitt 71 der Innenseite 29 der Öffnung 31 anliegen zu können, ist die Anschlagfläche 69 bevorzugt an der radial außenliegenden Seite 87 des Gelenkbolzens 19 angeordnet. Gleichzeitig ist die Anschlagfläche 60 bevorzugt innerhalb einer dem übrigen Kettenglied 15 über die Gelenkachse 23 gegenüberliegenden Querschnittshälfte 88 angeordnet.

Im Folgenden ist auf die Fig. 4 eingegangen, welche ein stehendes Kettenglied 17 mit einem Führungssteg 53 in einem Querschnitt quer zur Umfangsrichtung U dargestellt.

Wie schon zuvor beschrieben, ist der der Führungssteg 53 so in der Öffnung 31 des Kettenglieds 17 angeordnet, dass eine Unterbrechung 51 des radial innenliegenden Schenkels 49 durch den Führungssteg 53 geschlossen ist. Hierbei liegt der Führungssteg 53 an der Innenseite 29, insbesondere an der der Unterbrechung 51 gegenüberliegenden Innenseite 29 an.

Der Führungssteg 53 besitzt eine Schulter 89, durch die sich der Führungssteg 53 axial weiter zum Laufnetz 7 hin erstreckt als der im Kettenglied 17 angeordnete übrige Teil des Führungsstegs 53.

Die Schulter 89 erstreckt sich in Richtung auf das Laufnetz 7 bzw. parallel zur axialen Richtung A in etwa so weit wie ein mit dem Kettenglied 17 verbundenes Kettenglied 15. Mit anderen Worten schließen der Führungssteg 53 und das Kettenglied 15 in axialer Richtung auf einer Höhe im Wesentlichen bündig miteinander ab.

Der Führungssteg 53 ist bevorzugt schalenförmig aufgebaut, wobei eine Wandung 91 axial innenliegend und ein von außen zugänglicher Hohlraum 93 axial außenliegend angeordnet ist. Durch die schalenartige Ausgestaltung kann Gewicht gespart werden.

Die Wandung 91 kann im montierten Zustand an der Reifenflanke 11, die in Fig. 4 lediglich gestrichelt dargestellt ist, anliegen. Durch den Führungssteg 53, insbesondere durch dessen innerhalb des Kettenglieds 17 angeordnetes radial außenliegendes Ende 95 erstrecken sich zwei Schenkel 97 eines Endgliedes 99 des Laufnetzes 7.

Das Endglied 99 kann als U-förmiger Bügel gebildet sein, dessen Grund bzw. Rundung 101 mit dem übrigen Laufnetz 7, bzw. mit einem Kettenglied davon verbunden ist. Die Schenkel dagegen ragen wie schon beschrieben, durch den Führungssteg 53 hindurch.

Zusätzlich ragen die Schenkel 97 parallel zur axialen Richtung A durch eine axial außenliegende Verschlussplatte 103 hindurch. Die freien Enden 105 der Schenkel 97 können mit der Verschlussplatte 103, insbesondere durch Schweißverbindungen, verbunden sein. Die Verschlussplatte 103 liegt quer zur axialen Richtung A flächig am radial außenliegenden Ende 95 des Führungsstegs 53 an. Die Verschlussplatte 103 kann mit dem Ende 95 des Führungsstegs 53 ebenfalls verschweißt sein.

Die Schenkel 97 können in einem Bereich zwischen dem Kettenglied 17 und der Rundung 101 radial nach außen hin abgewinkelt sein, so dass eine Öffnung 107 des an der Rundung 101 angebrachten Kettenglieds radial weiter außen liegt als die freien Enden 105 der Schenkel 97.

Von dem Bereich der Schulter 89 hin zum radial innenliegenden Ende 109 kann der Führungssteg 53 in axialer Richtung A schmaler werden.

### Bezugszeichen

- 1: Gleitschutzkette
- 3: Reifen
- 5: Führungskette
- 7: Laufnetz
- 9: Lauffläche
- 11: Reifenflanke
- 12: Reifenachse
- 13: Reifenradius
- 15: liegende Kettenglieder
- 17: stehende Kettenglieder
- 19: Gelenkbolzen
- 21: Drehgelenk
- 23: Gelenkachse
- 25: Längsachse eines Bolzen
- 27: Verdrehsperre
- 29: Innenseite
- 31: Öffnung
- 33: Gelenkwinkel
- 35: maximaler Gelenkwinkel
- 37: Längsachse des Kettenglieds 15
- 39: Längsachse des Kettenglieds 17
- 41: Selbsttrageradius
- 43: Öffnungen der Kettenglieder 15
- 45: Schenkel des Kettenglieds 15
- 47: C-förmiges Teilglied
- 49: Schenkel des Kettenglieds 17
- 51: Unterbrechung
- 53: Führungssteg
- 55: Rundung
- 57: Teilöffnung
- 59: radiale Länge
- 61: Länge in Umfangsrichtung
- 63: Querschnitt des Gelenkbolzens
- 65: Anschlag
- 67: Schulter
- 69: Anschlagfläche
- 71: radial außenliegender Abschnitt der Innenseite
- 73: der Anschlagfläche gegenüberliegender Abschnitt
- 75: radial innenliegender Abschnitt
- 77: Durchmesser des Gelenkbolzens
- 79: Innendurchmesser der Öffnung
- 81: angefügtes Zusatzelement
- 83: stoffschlüssige Verbindung
- 85: Flächennormale
- 87: radial außenliegende Seite
- 88: Querschnittshälfte
- 89: Schulter
- 91: Wandung
- 93: Hohlraum
- 95: radial außenliegendes Ende
- 97: Schenkel
- 99: Endglied
- 101: Rundung
- 103: Verschlussplatte
- 105: freies Ende
- 107: Öffnung
- 109: radial innenliegendes Ende des Führungsstegs

- A: axiale Richtung
- R: radiale Richtung
- U: Umfangsrichtung

## Patentansprüche

1. Gleitschutzkette (1) für Reifen (3), insbesondere für Bogie-Achsen, wobei die Gleitschutzkette (1) zwei seitenstabile Führungsketten (5) aufweist, die im montierten Zustand seitlich der Laufflächen (9) der Reifen (3) angeordnet sind, wobei die Gleitschutzkette (1) ein biegeschlaffes Laufnetz (7) aufweist, das sich zwischen den beiden Führungsketten (5) erstreckt, und wobei wenigstens eine Führungskette (5) in Umfangsrichtung (U) durch Gelenkbolzen (19) miteinander gelenkartig verbundene Kettenglieder (15, 17) und wenigstens eine Verdrehsperre (27), durch die ein maximaler Gelenkwinkel (35) zwischen zwei miteinander verbundenen Kettengliedern (15, 17) vorgegeben ist, aufweist, wobei der Gelenkwinkel (35) zwischen zwei miteinander verbundenen Kettengliedern (15, 17) der Winkel ist, den die beiden miteinander verbundenen Kettenglieder (15, 17) miteinander einschließen und als Winkel zwischen den Längsachsen (37, 39) der Kettenglieder (15, 17) ermittelt wird, **dadurch gekennzeichnet, dass** sich ein Teil der Verdrehsperre (27) an wenigstens einem Gelenkbolzen (19) befindet.

2. Gleitschutzkette (1) nach Anspruch 1, **dadurch gekennzeichnet, dass** die wenigstens eine Verdrehsperre (27) wenigstens eine Anschlagfläche (69) am Gelenkbolzen (19) aufweist, die bei Erreichen des maximalen Gelenkwinkels (35) an der Innenseite (29) einer Öffnung (31) des den Gelenkbolzen (19) haltenden Kettenglieds (17) anschlägt.

3. Gleitschutzkette (1) nach Anspruch 1 oder 2, **dadurch gekennzeichnet, dass** die wenigstens eine Führungskette (5) aus abwechselnd stehenden und liegenden, jeweils ringförmigen Kettengliedern (15, 17) aufgebaut ist, wobei bei den stehenden Kettengliedern (17) die Öffnungen (31) axial ausgerichtet und bei den liegenden Kettengliedern (15) radial ausgerichtet sind und wobei die liegenden Kettenglieder (15) die Gelenkbolzen (19) aufweisen.

4. Gleitschutzkette (1) nach Anspruch 2 oder 3, **dadurch gekennzeichnet, dass** wenigstens ein Gelenkbolzen (19) zur Bildung der wenigstens einen Anschlagfläche (69) einen nichtkreisförmigen Querschnitt (63) aufweist.

5. Gleitschutzkette (1) nach einem der Ansprüche 2 bis 4, **dadurch gekennzeichnet, dass** der wenigstens eine Gelenkbolzen (19) mit wenigstens einer Schulter (67) versehen ist, die die wenigstens eine Anschlagfläche (69) aufweist.

6. Gleitschutzkette (1) nach einem der Ansprüche 2 bis 5, **dadurch gekennzeichnet, dass** der wenigstens eine Gelenkbolzen (19) mit wenigstens einem angefügtem Zusatzelement (81) versehen ist, das die wenigstens eine Anschlagfläche (69) aufweist.

7. Gleitschutzkette (1) nach Anspruch 6, **dadurch gekennzeichnet, dass** das wenigstens eine angefügte Zusatzelement (81) durch eine stoffschlüssige Verbindung (83) mit dem übrigen Gelenkbolzen (19) verbunden ist.

8. Gleitschutzkette (1) nach einem der Ansprüche 2 bis 7, **dadurch gekennzeichnet, dass** die wenigstens eine Anschlagfläche (69) vom übrigen die Anschlagfläche (69) aufweisenden Kettenglied (15) weg weisend angeordnet ist.

9. Gleitschutzkette (1) nach Anspruch 8, **dadurch gekennzeichnet, dass** sich zwei Anschlagflächen (69) in Bezug auf die Öffnung (31) eines stehenden Kettengliedes (17) gegenüberliegen.

10. Gleitschutzkette (1) nach einem der Ansprüche 2 bis 9, **dadurch gekennzeichnet, dass** die wenigstens eine Anschlagfläche (69) an einer radial außenliegenden Seite (87) eines Gelenkbolzens (19) angeordnet ist.

11. Gleitschutzkette (1) nach einem der Ansprüche 2 bis 10, **dadurch gekennzeichnet, dass** die wenigstens eine Anschlagfläche (69) bei Erreichen des maximalen Gelenkwinkels (35) zumindest abschnittsweise plan an der Innenseite (29) der Öffnung (31) eines den Gelenkbolzen (19) haltenden Kettengliedes (17) anliegt.

12. Gleitschutzkette (1) nach einem der Ansprüche 3 bis 11, **dadurch gekennzeichnet, dass** wenigstens ein stehendes Kettenglied (17) mit wenigstens einem sich radial in Richtung der Reifenachse (12) erstreckenden Führungssteg (53) zum seitlichen Führen der Gleitschutzkette (1) am Reifen (3) versehen ist.

13. Gleitschutzkette (1) nach Anspruch 12, **dadurch gekennzeichnet, dass** das wenigstens eine stehende Kettenglied (17) ein C-förmiges Teilglied (47) mit einer Unterbrechung (51) in einem Schenkel (49) aufweist, wobei die Unterbrechung (51) durch den wenigstens einen Führungssteg (53) zumindest teilweise geschlossen ist.

14. Gleitschutzkette (1) nach Anspruch 12 oder 13, **dadurch gekennzeichnet, dass** eine radiale Länge (59) des stehenden Kettenglieds (17) größer ist als eine Länge (61) des stehenden Kettenglieds in einer Umfangsrichtung (U) der Gleitschutzkette (1).

## Claims

1. An anti-skid chain (1) for tyres (3), in particular for bogie axles, wherein the anti-skid chain (1) has two laterally stable guide chains (5) which in the mounted state are arranged to the side of the treads (9) of the tyres (3), wherein the anti-skid chain (1) has a flexible tread mesh (7) which extends between the two guide chains (5), and wherein at least one guide chain (5) has chain links (15, 17) interconnected in the peripheral direction (U) in the manner of an articulation by hinge pins (19) and at least one rotation blocking means (27) by which a maximum angle of articulation (35) between two interconnected chain links (15, 17) is set, wherein the angle of articulation (35) between two interconnected chain links (15, 17) is the angle which the two interconnected chain links (15, 17) enclose with each other, and is ascertained as the angle between the longitudinal axes (37, 39) of the chain links (15, 17), **characterised in that** part of the rotation blocking means (27) is located on at least one hinge pin (19).

2. An anti-skid chain (1) according to claim 1, **characterised in that** the at least one rotation blocking means (27) has at least one stop face (69) on the hinge pin (19), which stop face when the maximum angle of articulation (35) is reached strikes the inner side (29) of an opening (31) of the chain link (17) holding the hinge pin (19).

3. An anti-skid chain (1) according to claim 1 or 2, **characterised in that** the at least one guide chain (5) is constructed from alternately vertical and horizontal, in each case annular, chain links (15, 17), with the openings (31) being axially oriented in the vertical chain links (17) and being radially oriented in the horizontal chain links (15), and with the horizontal chain links (15) including the hinge pins (19).

4. An anti-skid chain (1) according to claim 2 or 3, **characterised in that** at least one hinge pin (19) has a non-circular cross-section (63) for forming the at least one stop face (69).

5. An anti-skid chain (1) according to one of claims 2 to 4, **characterised in that** the at least one hinge pin (19) is provided with at least one shoulder (67) which includes the at least one stop face (69).

6. An anti-skid chain (1) according to one of claims 2 to 5, **characterised in that** the at least one hinge pin (19) is provided with at least one attached additional element (81) which includes the at least one stop face (69).

7. An anti-skid chain (1) according to claim 6, **characterised in that** the at least one attached additional element (81) is connected to the rest of the hinge pin (19) by a material-formed connection (83).

8. An anti-skid chain (1) according to one of claims 2 to 7, **characterised in that** the at least one stop face (69) is arranged facing away from the rest of the chain link (15) which includes the stop face (69).

9. An anti-skid chain (1) according to claim 8, **characterised in that** two stop faces (69) lie opposite one another in relation to the opening (31) of a vertical chain link (17).

10. An anti-skid chain (1) according to one of claims 2 to 9, **characterised in that** the at least one stop face (69) is arranged on a radially outer side (87) of a hinge pin (19).

11. An anti-skid chain (1) according to one of claims 2 to 10, **characterised in that** the at least one stop face (69), when the maximum angle of articulation (35) is reached, at least in portions lies flat against the inner side (29) of the opening (31) of a chain link (17) holding the hinge pin (19).

12. An anti-skid chain (1) according to one of claims 3 to 11, **characterised in that** at least one vertical chain link (17) is provided with at least one guide web (53) extending radially in the direction of the tyre axis (12) for laterally guiding the anti-skid chain (1) on the tyre (3).

13. An anti-skid chain (1) according to claim 12, **characterised in that** the at least one vertical chain link (17) has a C-shaped partial link (47) with a break (51) in one leg (49), the break (51) being at least partially closed by the at least one guide web (53).

14. An anti-skid chain (1) according to claim 12 or 13, **characterised in that** a radial length (59) of the vertical chain link (17) is greater than a length (61) of the vertical chain link in a peripheral direction (U) of the anti-skid chain (1).

## Revendications

1. Chaîne antidérapante (1) pour des pneumatiques (3), en particulier pour un essieu de bogie, dans laquelle la chaîne antidérapante (1) présente deux chaînes de guidage (5) latéralement stable qui sont agencées, dans l'état monté, à côté des surfaces de roulement (9) des pneumatiques (3), dans laquelle la chaîne antidérapante (1) présente un maillage de roulement flexible (7) qui s'étend entre les deux chaînes de guidage (5), et dans laquelle au moins une chaîne de guidage (5) présente des maillons de chaîne (15, 17) reliés entre eux à la manière d'une articulation par des boulons d'articulation (19) dans une direction périphérique (U) et au moins un mécanisme de blocage anti-rotation (27), qui permet de spécifier un angle d'articulation (35) maximal entre deux maillons de chaîne (15, 17) reliés entre eux, dans laquelle l'angle d'articulation (35) entre deux maillons de chaîne (15, 17) reliés entre eux est l'angle que les deux maillons de chaîne (15, 17) reliés entre eux et est déterminé comme un angle entre les axes longitudinaux (37, 39) des maillons de chaîne (15, 17), **caractérisée en ce qu'**une partie du mécanisme de blocage anti-rotation (27) se trouve sur au moins un boulon d'articulation (19).

2. Chaîne antidérapante (1) selon la revendication 1, **caractérisée en ce que** le au moins un mécanisme de blocage anti-rotation (27) présente au moins une surface de butée (69) au niveau du boulon d'articulation (19), qui, lorsque l'angle d'articulation (35) maximal est atteint, vient en butée contre la face intérieure (29) d'une ouverture (31) du maillon de chaîne (17) maintenant le boulon d'articulation (19).

3. Chaîne antidérapante (1) selon la revendication 1 ou 2, **caractérisée en ce que** la au moins une chaîne de guidage (5) est constituée de maillons de chaîne (15, 17) en forme d'anneau, placés alternativement et horizontaux, les ouvertures (31) étant orientées axialement pour les maillons de chaîne verticaux (17) et orientées radialement pour les maillons de chaîne horizontaux (15), et les maillons (15) présentant les boulons d'articulation (19).

4. Chaîne antidérapante (1) selon la revendication 2 ou 3, **caractérisée en ce qu'**au moins un boulon d'articulation (19) présente une section transversale non circulaire (63) pour la formation de la au moins une surface de butée (69).

5. Chaîne antidérapante (1) selon l'une quelconque des revendications 2 à 4, **caractérisée en ce que** le au moins un boulon d'articulation (19) est pourvu d'au moins un épaulement (67) qui présente la au moins une surface de butée (69).

6. Chaîne antidérapante (1) selon l'une quelconque des revendications 2 à 5, **caractérisée en ce que** le au moins un boulon d'articulation (19) est pourvu d'au moins un élément supplémentaire associé (81) qui présente la au moins une surface de butée (69).

7. Chaîne antidérapante (1) selon la revendication 6, **caractérisée en ce que** le au moins un élément supplémentaire associé (81) est relié au reste du boulon d'articulation (19) par une liaison par coopération de matières (83).

8. Chaîne antidérapante (1) selon l'une quelconque des revendications 2 à 7, **caractérisée en ce que** la au moins une surface de butée (69) est agencée à l'opposé du reste du maillon de chaîne (15) présentant la surface de butée (69).

9. Chaîne antidérapante (1) selon la revendication 8, **caractérisée en ce que** deux surfaces de butée (69) sont opposées l'une à l'autre par rapport à l'ouverture (31) d'un maillon de chaîne vertical (17).

10. Chaîne antidérapante (1) selon l'une quelconque des revendications 2 à 9, **caractérisée en ce que** la au moins une surface de butée (69) est agencée sur un côté radialement extérieur (87) d'un boulon d'articulation (19).

11. Chaîne antidérapante (1) selon l'une quelconque des revendications 2 à 10, **caractérisée en ce que** la au moins une surface de butée (69) s'applique au moins partiellement de manière plane contre la face intérieure (29) de l'ouverture (31) d'un maillon de chaîne (17) maintenant le boulon d'articulation (19) lorsque l'angle d'articulation maximal (35) est atteint.

12. Chaîne antidérapante (1) selon l'une quelconque des revendications 3 à 11, **caractérisée en ce qu'**au moins un maillon de chaîne vertical (17) est muni d'au moins une nervure de guidage (53) s'étendant radialement dans la direction de l'axe de pneumatique (12) pour un guidage latéral de la chaîne antidérapante (1) au niveau du pneumatique (3).

13. Chaîne antidérapante (1) selon la revendication 12, **caractérisée en ce que** le au moins un maillon de chaîne vertical (17) présente un élément partiel en forme de C (47) avec une interruption (51) dans une branche (49), l'interruption (51) étant fermée au moins partiellement par la au moins une nervure de guidage (53).

14. Chaîne antidérapante (1) selon la revendication 12 ou 13, **caractérisée en ce qu'**une longueur radiale (59) du maillon de chaîne vertical (17) est plus grande qu'une longueur (61) du maillon de chaîne vertical dans une direction périphérique (U) de la chaîne antidérapante (1).
